(19) **Europäisches Patentamt / European Patent Office / Office européen des brevets**

(11) **EP 2 978 559 B1**

(12) **EUROPEAN PATENT SPECIFICATION**

(45) Date of publication and mention
of the grant of the patent:
**20.05.2020 Bulletin 2020/21**

(51) Int Cl.:
*B23K 26/06* (2014.01)     *B23K 26/24* (2014.01)
*H01S 3/067* (2006.01)     *B23K 26/323* (2014.01)

(21) Application number: **14772779.6**

(22) Date of filing: **28.03.2014**

(86) International application number:
**PCT/US2014/032158**

(87) International publication number:
**WO 2014/160927 (02.10.2014 Gazette 2014/40)**

(54) **LASER WELDING SYSTEM AND METHOD**

LASERSCHWEISSSYSTEM UND -VERFAHREN

SYSTÈME ET PROCÉDÉ DE SOUDAGE AU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 US 201313853612**

(43) Date of publication of application:
**03.02.2016 Bulletin 2016/05**

(73) Proprietor: **Photon Automation, Inc.
Greenfield, IN 46140 (US)**

(72) Inventor: **MUDD, Richard, E., II
Frankfort, IN 46140 (US)**

(74) Representative: **Dauncey, Mark Peter
Marks & Clerk LLP
1 New York Street
Manchester M1 4HD (GB)**

(56) References cited:
**EP-A1- 0 531 139          JP-A- S62 144 888
US-A- 5 595 670          US-A- 6 087 619
US-A1- 2006 000 812      US-A1- 2007 164 004
US-A1- 2010 118 899      US-B1- 6 489 985**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to laser control systems, and more particularly, but not exclusively, to laser welding systems in which the power density is dynamically varied based on the beam's position on the parts to be welded.

One of the most difficult challenges to laser welding two materials together is compensating for different melting points or thermal characteristics in the materials. The typical approach to welding materials with dissimilar melting points or of different thicknesses is to apply more energy to the material with the higher melting point. This has traditionally been done by moving the laser beam parallel to the weld junction with the center of the laser beam offset from the weld junction. Due to this offset, more of each laser spot lands on one side of the weld junction than the other, and thus a correspondingly greater proportion of the laser energy from each pulse is applied to the higher melting point material. However, having substantially unequal areas of each material being subject to each laser pulse typically leads to differing amounts of each material being melted into the weld pool, and a such an asymmetrical weld pool can compromise weld quality. Conversely, if the laser spot is more centered on the weld junction in an effort to melt more equal amounts of each material, there is a risk that the more fragile material would be obliterated or that there would be insufficient melting of the more durable material, which can also comprise the weld quality. Thus, selecting the proper offset that achieves the ideal distribution of energy between the two materials often must be determined through trial and error.

Since the development of nearly diffraction limited diode pumped solid state lasers and fiber lasers, it has become possible to focus the laser energy onto a greatly reduced spot size, for example, to a spot diameter about 1/10 the size of the spot of a conventional Nd:YAG laser. This small laser spot size has made welding along a seam more challenging. The primary difficulty lies in the need to apply a sufficient amount of energy to melt each material. Due to the greatly reduced spot size, the inherent gaps between the materials becomes more significant, and it becomes nearly impossible to apply sufficient energy to each material by simply offsetting a single spot relative to the material junction, as the small spot size is not large enough to encompass a sufficient amount of each material to create an adequate weld pool.

Thus, in order to assure that appropriate amounts of energy are applied to each material, a highly focused laser beam needs to be cycled back and forth across the junction, typically in a zig zag pattern. This movement can be accomplished by moving the part relative to a stationary laser beam, or more typically, by utilizing two-dimensional beam steering optics to steer the beam in a specified pattern across the material junction. Typical beam steering optics utilize mirrors and a two-axis galvanometer steering head to steer the beam in two dimensions.

By moving a highly focused laser beam along a zig zag path that traverses the material junction, the laser energy is applied over a wider area of each material than could be accomplished by simply moving the beam parallel to the junction. However, for the same reasons the larger diameter spots of conventional Nd:YAG lasers were offset from the material junction, the zig zag pattern is also typically offset relative to the material junction such that the laser energy is applied over a greater area of the higher melting point material than of the lower melting point material, which can likewise yield an asymmetrical weld pool due to dissimilar amounts of each material being melted.

Furthermore, as the laser moves, it is typically operated so as to produce either a continuous beam or a series of short duration pulses at a specified pulse repetition rate. When the laser is operating in a pulsed mode at low to mid-frequencies up to about 5kHz, which many precision fiber laser welding applications require, the relationship between the frequency of the zig-zag pattern and the pulse repetition rate becomes important. For example, if the zig-zag motion is operating at a frequency of 1 kHz and the pulse rate of the laser is also 1 kHz, the laser pulses will not be distributed across the desired welding zone but will instead occur at the same relative location during each pass, for example, with all pulses being in line with the material junction or all on one side or the other, depending on the point of the cycle at which the pulse train of the laser commences. Therefore, for many precision welding applications, it is typically necessary to have the pulse rate of the fiber laser be significantly greater than the period of the movement across the junction, which limits the overall welding speed for the application.

Accordingly, there is a need for improvements in this area.

EP0531139 discloses a method of laser-welding metal sheets having different thicknesses. In this method, during laser welding, a laser beam is directed to a line (a weld line) which is apart from an abutment line between two metal sheets having different thicknesses on a thicker sheet side. The laser beam may weave from side to side with respect to the weld line.

SUMMARY

According to one aspect, an improved method of laser welding is provided in which a series of variable intensity laser pulses are spread across the material junction such that the power density that is applied varies in a predetermined fashion based on the beam's position on the part. By customizing the power density being spread across the material junction, a more equal amount of each material can be melted so as to create a more uniform weld pool. Furthermore, since the laser does not need to fire multiple times within each pass across the junction, the overall weld time can be significantly reduced. This process of spreading variable intensity laser pulses across a material junction is referred to herein as Pulse Spread Technology, or PST.

In one form, a novel laser welding method involves steering a laser beam in a series of passes across the junction between first and second materials, wherein during each of the passes the laser power is applied across a continuous high aspect ratio area that traverses the junction, with each of the high aspect ratio areas comprising a first elongated area on the first material and a second elongated area on the second material. During each of the passes, the power density that is applied is varied in a predetermined manner such that one power density profile is applied to the elongated area on the first material and another power density profile is applied to the elongated area on the second material. The variations in the power density profiles may be accomplished by varying the intensity and/or speed of travel of the laser beam during each pass. The power density profiles may be customized such that the power density generally increases as the beam is approaching the material junction and the power density generally decreases as the beam is moving away from the material junction.

In another form, a novel system for applying laser energy to a workpiece, comprises, a fiber laser pulse generator operative to generate fiber laser pulses according to a user specified intensity profile upon receipt of a pulse initiation signal; beam steering optics operative to spread the laser pulses across high aspect ratio areas of the workpiece; and a controller coupled to the beam steering optics and to the pulse generator, wherein the controller is operative to send a series of pulse initiation signals to the fiber laser pulse generator that are synchronized with a series of beam steering signals sent to the beam steering optics so as to cause the laser pulses to be spread along a series of predetermined high aspect ratio areas of the workpiece. The pulse generator may be configured so as to generate different fiber laser pulses according to different user specified intensity profiles upon receipt of different pulse initiation signals. The system may further include an input device for receiving a user specified series of moves for the beam steering optics and the user specified intensity profile to be applied during specified moves in the series of moves.

In another form, a novel laser welding system for dynamically varying the laser power density applied to different sides of a material junction comprises an input device for receiving a user specified series of moves for a fiber laser beam across a material junction and one or more varying intensity profiles for the laser beam to be applied during specified moves in the series of moves; a fiber laser configured to generate a laser beam according to the one or more varying intensity profiles upon receipt of a corresponding laser initiation signal; beam steering optics for moving the generated laser beam; and a controller configured to send the laser initiation signals to the fiber laser and to operate the beam steering optics so as to move the laser beam across the junction according to the specified series of moves, wherein the laser initiation signals are synchronized with the operation of the beam steering optics such that the laser power density applied on one side of the material junction is greater than the laser power density applied on the other side of the material junction.

In another form, a novel method for laser welding comprises generating a series of varying intensity beams from a fiber laser, the beams having an asymmetrical intensity profile comprising an increasing intensity region, a central region of high intensity, and a decreasing intensity region; and spreading the series of beams across a material junction such that a majority of the increasing intensity region of each beam falls on one side of the junction and a majority of the decreasing intensity region of each beam falls on the other side of the junction. The central region of each beam may be generally aligned with the material junction. Each beam may be spread across a high aspect ratio area comprising a first elongated area on one side of the junction and a second elongated area on the other side of the junction. The elongated areas on each side of the junction may be of similar size yet receive different amounts of power to compensate for different thermal characteristics of each material.

BRIEF DESCRIPTION OF THE FIGURES

Features of the invention will be better understood from the following detailed description when considered in reference to the accompanying drawings, in which:

Figure 1 is a schematic side view depicting a known method of welding dissimilar materials with the large diameter spot of an Nd:YAG laser.

Figure 2 is a schematic side view depicting a known method of welding dissimilar material with the relative small diameter spot of a fiber laser.

Figure 3 is a schematic top view showing the distribution of the laser pulses during the know method of welding of Figure 2.

Figure 4 is a schematic illustration of a known fiber laser welding system.

Figure 5 is a side view showing a method of welding with a fiber laser according to an embodiment.

Figure 6 is a top view showing the continuous high aspect ratio areas on parts welded according to an embodiment.

Figure 7 is an enlarged view of the weld pool of FIG. 5 superimposed with a plot correlating the laser power density applied to the various positions on the workpiece.

Figure 8 is a schematic illustration of a fiber laser welding system according to an embodiment.

Figure 9 is a plot showing the pulse initiation signals and laser intensity profiles versus time according to an embodiment.

Figure 10 is an illustration of an input screen for receiving the user specified series of moves according to an embodiment.

Figure 11 is an illustration of an input screen for receiving the user specified laser intensity profile according to an embodiment.

Figure 12 shows the main screen for a system user interface according to another embodiment.

Figure 13 shows the PST Toolbox pull down menu for the Fig. 12 user interface.

Figure 14 shows the File pull down menu for the Fig. 12 user interface.

Figure 15 shows the Edit pull down menu for the Fig. 12 user interface.

Figure 16 shows the Material pull down menu for the Fig. 12 user interface illustrating the selection of Material B.

Figure 17 shows the Material pull down menu for the Fig. 12 user interface illustrating the selection of the finish for Material A.

Figure 18 shows the Weld pull down menu for the Fig. 12 user interface illustrating the selection of the Weld Type.

Figure 19 shows the Weld pull down menu for the Fig. 12 user interface illustrating the selection of Weld Geometery.

Figure 20 shows the Cleanup pull down menu for the Fig. 12 user interface illustrating selection of cleanup position.

Figure 21 shows the Cleanup pull down menu for the Fig. 12 user interface illustrating selection of cleanup geometry.

Figure 22 shows the Laser pull down menu for the Fig. 12 user interface illustrating selectable of laser parameters.

Figure 23 shows selection of the SeamFinder pull down menu for the Fig. 12 user interface illustrating selection of parameters for defining the laser path.

Figure 24 shows a sample waveform for welding 0.020 in thick nickel and steel together.

Figure 25 shows a sample waveform for welding 0.030 in thick nickel and steel together.

Figure 26 shows a sample waveform for welding 0.040 in thick nickel and steel together.

Figure 27 shows the camera display of two parts to be welded at the beginning of the SeamFinder routine.

Figure 28 shows the display of Fig. 27 with the addition of the user defined rough approximation for the laser path.

Figure 29 shows the display of Fig. 28 with the generated search boxes and seam points located.

Figure 30 shows the display of Fig. 29 with arrows calling out the beginning and end of the weld line and the corners.

Figure 31 shows the display of Fig. 29 with the user prompt to approve the weld path upon the completion of the SeamFinder routine.

## DETAILED DESCRIPTION OF REPRESENTATIVE EMBODIMENTS

While the present invention can take many different forms, for the purpose of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications of the described embodiments, and any further applications of the principles of the invention as described herein, are contemplated within the scope of the appended claims.

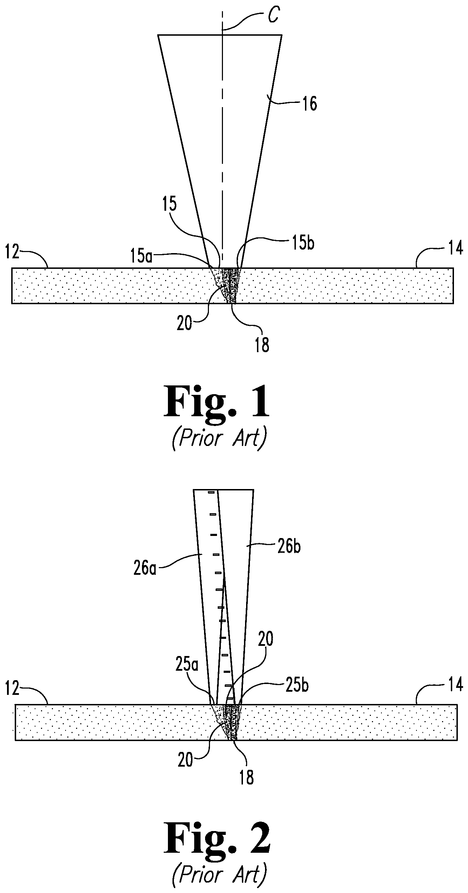

FIG. 1 is a side schematic view showing a conventional laser welding of dissimilar materials using an Nd:YAG laser 16 to weld a high melting point material 12 and a low melting point material 14. The laser beam 16 is directed so as to be incident on the junction between the two materials. The beam spot 15 is large enough to traverse the small gap 18 at the material junction with one portion 15a of the beam incident on the high melting point material 12 while another portion 15b is incident on the low melting point material 14. The center line C of the beam 16 is offset from the material junction, i.e. the gap 18, such that the portion 15a of the beam that is incident on the high melting point material 12 is larger than the portion 15b that is incident on the low melting point material 14. The amount of the laser offset is selected in an effort to compensate for the melting point differences between the materials in an effort to achieve a uniform weld pool, i.e. the larger the melting point differences, the greater the offset. As illustrated, the resulting weld pool 20 is shown as being asymmetrical, reflecting a situation where the offset compensation method has not been entirely successful and more of material 12 has been melted than has material 14. The offset compensation method is commonly used with the larger sized laser beams typically found with a Nd:YAG laser, but it becomes difficult to implement when using very small sized laser beams.

FIG. 2 shows a conventional application of a fiber laser to accomplish a similar welding application. Because the fiber laser beam 26 is focused to a much smaller spot size on the material, the laser beam 26 is steered across the material junction in a back and forth motion. The two beams 26a and 26b depict the positions of the beam 26 at the beginning and end of each pass, with beam 26a producing a spot 25a on the high melting point material 12 and beam 26b producing a spot 25b on the low melting point material.

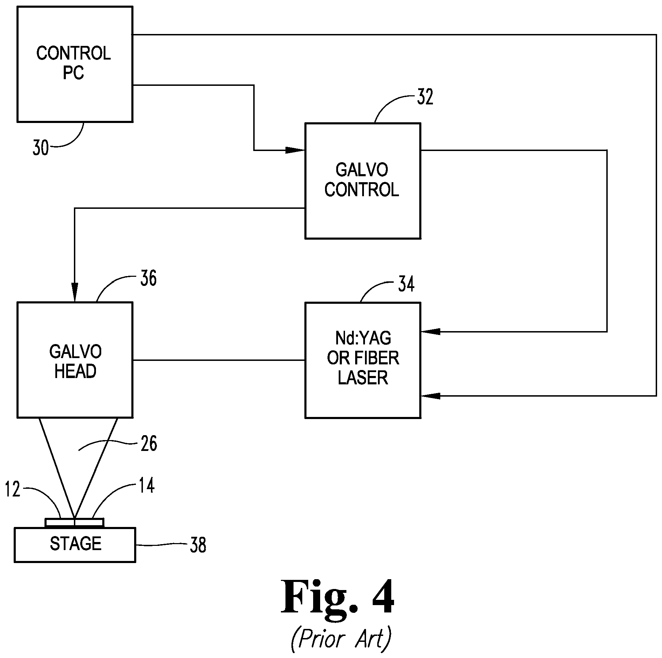

With reference to FIG. 4, the materials 12, 14 to be welded are typically mounted on an indexing stage 38 and the beam 26 generated by the laser 34 is steered using a galvo head 36 or similar beam steering optics. A system control PC 30 is used to define the shape of each pulse and the pulse repetition rate as well as the list of moves for the galvo head 36. The galvo moves are sent to the galvo controller 32 and the pulse shape and pulse frequency rate are sent to the laser 34 via an Ethernet or similar digital connection. When the parts are in their correct position, the galvo controller 32 sends control signals to move the galvo head 36 according to the programmed list of moves. When those moves require laser power, the galvo controller 32 sends a signal to the fiber laser 34 to open the shutter or otherwise commence releasing the pulses at the specified rate, and then to shut of the laser power the galvo controller 32 sends a signal to close the shutter or otherwise stop releasing the laser pulses.

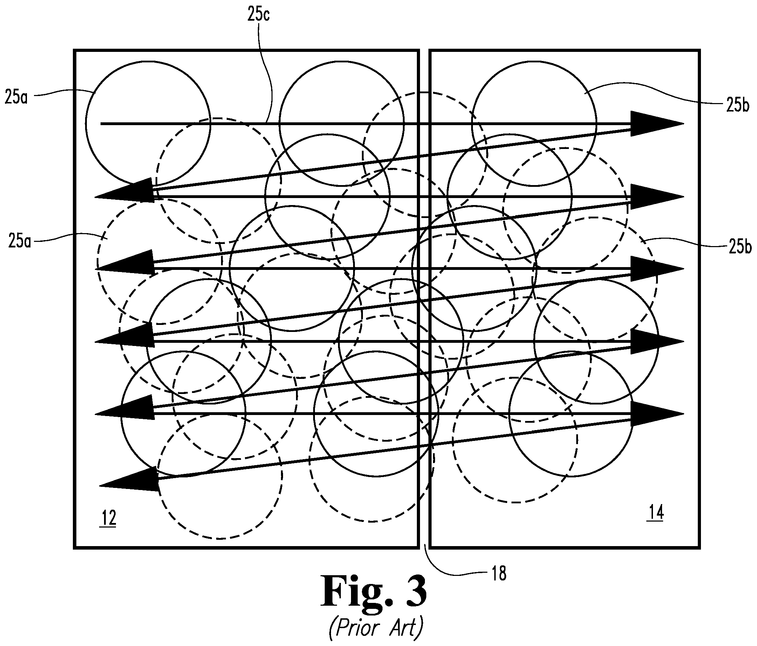

In this way, a series of short duration laser pulses impact the materials at a fixed frequency along a zig zag beam path traced by the movement of the galvo head 36. The resulting distribution of spots is shown in FIG. 3, which depicts a top view of the materials with arrows indicating the zig zag beam path and the circles representing the spots where each laser pulse lands. It is to be understood that, because the speed of the galvo head is slow relative to the duration of each pulse, each of the spots 25a, 25b, 25c are shown as circular, but in practice each spot may have a slight oval shape. The zig zag pattern extends further into the high melting point material 12 than the low melting point. Therefore, while some of the spots 25a land entirely on material 12, some of the spots 25b land entirely on material 14, and some of the spots 25c traverse the junction or gap 18 between the materials 12 and 14, a greater number of spots are incident on the higher melting point material 12. Accordingly, even though the laser intensity in each spot 25a, 25b, 25c is equal, a greater amount of laser energy is delivered into the higher melting point material 12 to compensate for its higher melting point. However, this compensation is not always successful, and because the spots extend further into the higher melting point material, there is a tendency for more of that material tends to be melted, yielding a weld pool 20 that tends to be asymmetric.

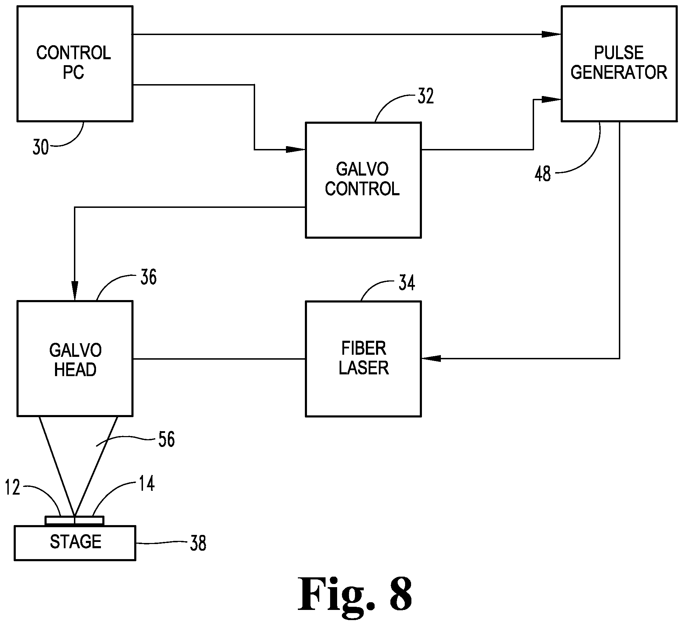

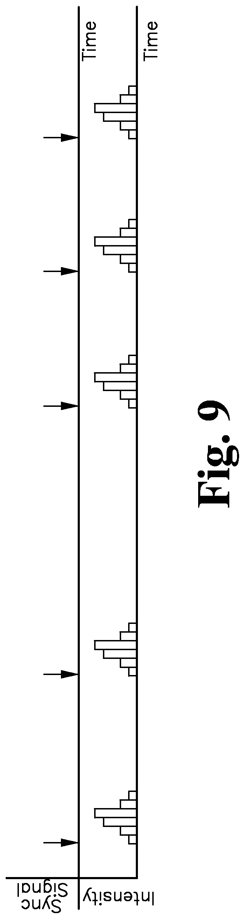

FIG. 8 shows a laser welding system 41 according to an embodiment of the present invention. A control PC 40 has an interface that allows the user to input a desired pulse shape, and this pulse shape is then programmed into a pulse generator 48 coupled to a fiber laser 44. The pulse generator 48 is configured to generate pulses on demand. In other words, unlike conventional fiber laser pulse generators that create shaped pulses at a specified pulse repetition rate, the pulse generator 48 is designed to generate a single pulse having the desired shape upon receipt of a pulse initiation signal. This is illustrated in FIG. 9, which shows the relationship of the pulse initiation signals, or pulse sync signals, with the resulting intensity output from the laser. In order to minimize the time lag between receipt of the pulse initiation signal and the output of the laser pulse, the pulse generator 48 may be in the form of a field programmable gate array (FPGA) that receives the pulse initiation signal digitally and essentially instantaneously generates the appropriate analog signal to cause the fiber laser 44 to output a laser pulse having the specified intensity profile.

The control PC 40 also provides for the input of the list of moves defining how and where those pulses are to be placed on the work piece, and this information is then sent to the galvo control 42. During operation, the galvo controller 42 sends beam steering signals to move the galvo head 46 according to the predetermined list of moves, and the controller 42 sends pulse initiation signals to the pulse generator 48 that are synchronized with the galvo moves. As a result, the pulses fired by the fiber laser 44 are synchronized with specified movements of the galvo head 46 such that the energy from each pulse is spread across a predetermined area of the workpiece. Preferably, the speed of the galvo movement is fast relative to the duration of the respective pulse such that the energy from the pulse is spread across an area of the workpiece having a high aspect ratio, for example, an area having a length that is at least 2, 3, 4, or 5 times its width.

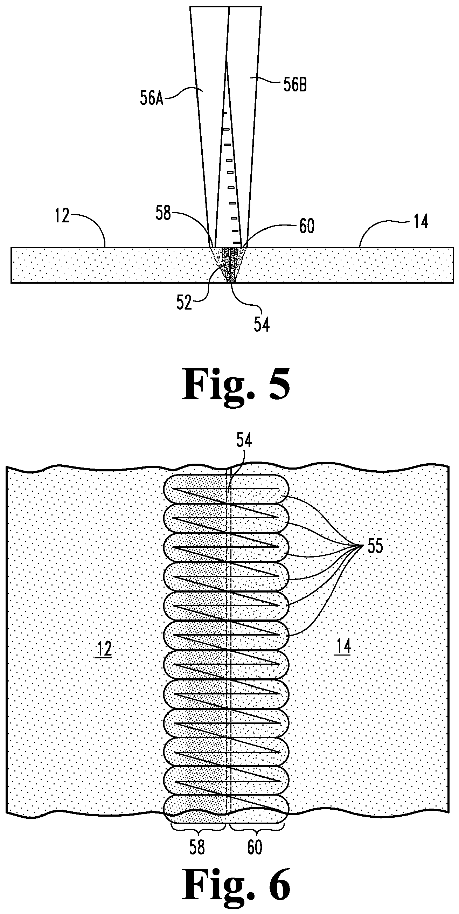

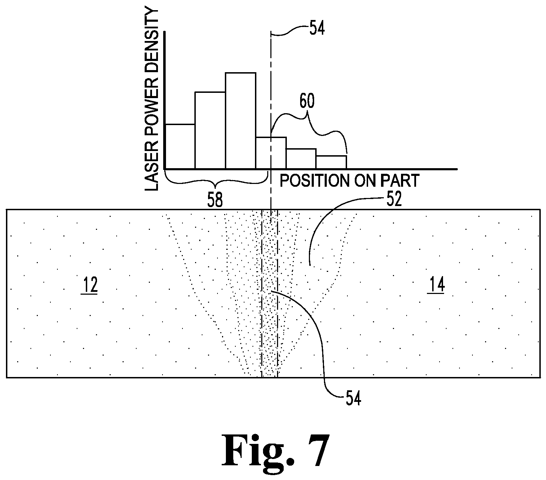

With reference to FIGS. 5, 6 and 7, in one preferred implementation a pulse is generated as the laser beam 56 is swept from position 56A to position 56B such that the energy from the pulse is spread across a continuous high aspect ratio area 55 that traverses the material junction 54. The area 55 has an elongated portion 58 that extends onto material 12 and an elongated portion 60 onto material 14, and the intensity of the laser is varied during the pass according to the intensity profile shown in FIG. 7. The galvo then moves to the next location along the junction 54 and another pulse is generated while the beam 56 is again swept across the junction in the same manner, again depositing the laser energy according to the intensity profile shown in FIG. 7 across another elongated portion 58 of material 12 and another elongated portion 60 of material 14. The process repeats until the pulses have been spread along a series of the elongated areas 55 to cover the desired weld zone.

As shown in FIG. 6, each of these elongated areas 55 are symmetrically aligned along the junction, with each of the elongated portions 58, 60 extending into the respective materials 12, 14 similar amounts. In the illustrated embodiment, the diameter of the beam is maintained constant during each pass, and thus the overall area of each of the elongated portion 58, 60 on each material 12, 14 receiving laser power is approximately equal. However, due to the variation in the intensity level of the laser during each stroke, which varies along the part position as shown in FIG. 7, the power density applied to each of the materials is different, with a lower power density being applied to the lower melting point material 14, and a higher power density being applied to the higher melting point material 12. Applying substantially unequal power densities over substantially equal areas of each material ensures that similar amounts of each material is melted, resulting in a weld pool 52 that is substantially symmetric.

The variation in power densities applied to each material 12, 14 is selected to accommodate the different thermal characteristics of each material and may vary in proportion to those differences. Accordingly, in applications where the thermal characteristics of the material are substantially different, the power density applied to each material may be substantially different, for example, differing by 25%, 40%, 50%, or 75%.

The intensity profile shown in FIG. 7 is in the form of a stair step pattern. This pattern is configured such that there are three sectors of sequentially increasing intensity as the laser moves from left to right along the high melting point material 12 towards the material junction 54. The intensity level steps down as the laser traverses the gap at the material junction 54, and then there are three sectors of sequentially decreasing intensity as the laser moves from the material junction 54 into the lower melting point material 14. As illustrated, the length of each of the sectors is generally equal, resulting in a gradually increasing intensity profile on material 12 and a gradually decreasing intensity profile on material 14. This gradual ramp up and ramp down of the laser power at the beginning and end of the laser pulse helps to reduce pitting and porosity.

The ability to quickly reduce laser power at the point that the laser beam begins interacting with the more fragile material prevents unwanted perforation or ablation and ensures a more uniform weld. As illustrated, the step down in intensity at the material junction may be offset slightly towards the higher melting point material 12. This is done to provide a margin of error to avoid the highest laser intensity of the pulse impacting the more fragile material 14, thereby further reducing the chance that there would be unwanted obliteration or piercing of the more fragile material.

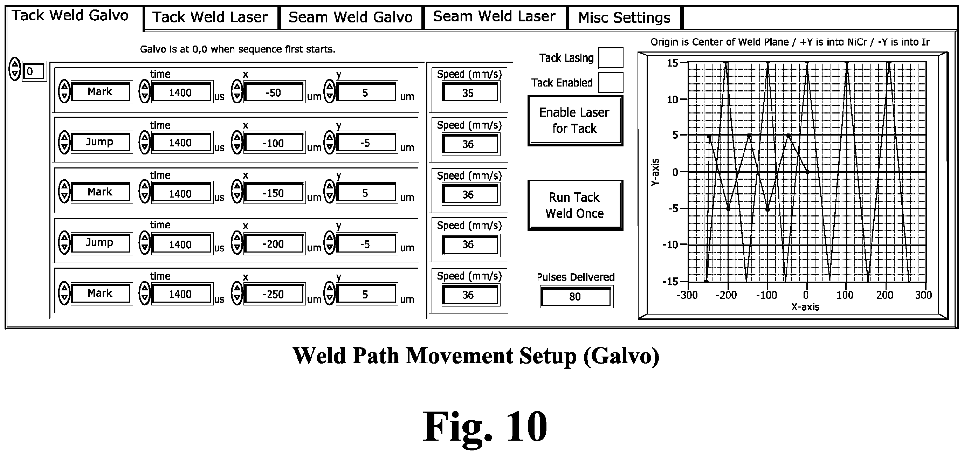

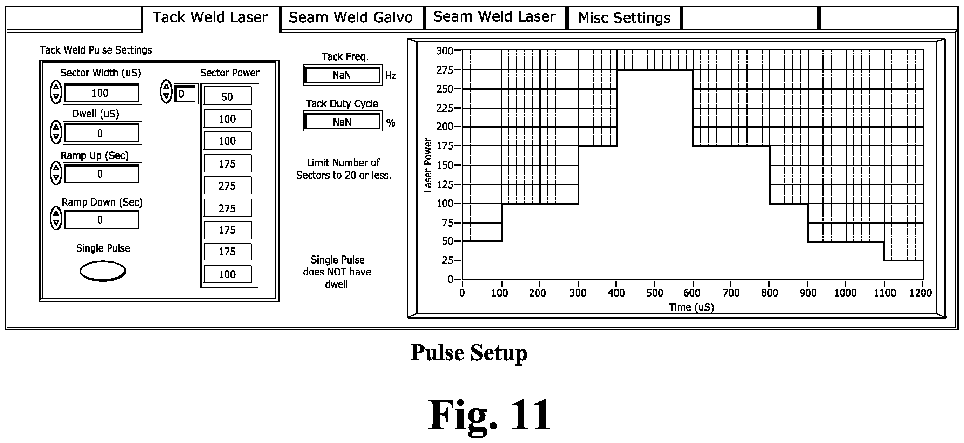

FIG. 10 shows a screen shot of the input screen the user uses for inputting the list of galvo moves and for designating whether or not laser power is to be applied during the move. The intensity profile for the pulse to be applied is set via the input screen shown in FIG. 11. As illustrated, the duration of each pulse is 1200μs and is divided into 100μs sectors, with the power of each sector able to be set independently. The resulting plot of laser power versus time is displayed in the graph on the right side of FIG. 11

Turning back to FIG. 10, the galvo begins at (0,0) with the x-axis representing the material junction. Each galvo moves may be designated as either a "mark" move, which involves the application of laser power during the move, or a "jump" move which does not. The user inputs the duration of each move and the ending coordinates for each move, and the software calculates a constant speed for the galvo head to accomplish the move in the specified time. As illustrated, each of the moves is set to occur in 1400μs, which is slightly longer than the duration set for each pulse. Delaying the initiation of each pulse can be used to compensate for inertial effects of the galvo movement.

Lines showing the galvo path for the series of moves is shown in the graph on the right side of the screen in FIG. 10. As illustrated, the initial moves zig-zag across the material junction and penetrate 5μm into each material, for example going from (-50, 5) to (-100, -5), and the later moves penetrate 15μm into each material, for example going from (-250,-15) to (200,15). Because each of the moves are set to the same duration, the speed at which the laser moves during the later set of galvo moves (i.e. the longer passes across the material junction) is greater than the speed of the laser during the initial moves (i.e. the shorter passes across the material junction). As a result, during the initial moves, when the part is cold, the power from each pulse is concentrated in a smaller area than in the later moves, when the temperature of the part has become elevated due to retained heat from the earlier mark moves. Thus, because the laser pulse delivered during each mark move is the same, the power density delivered to the part during these initial moves is greater, which serves to "pierce" the material and begin the weld process. Then, during the later moves, as the part has retained some of the heat from the earlier moves, the reduced power density resulting from spreading the pulse over a larger area is sufficient to continue the weld process without destroying the weld junction.

Because the laser is being moved at a fixed rate during each individual pass while the output intensity of the laser is varied according to the specified intensity profile, the power density applied to different portions of the part varies in accordance with the variation in the laser intensity profile. This precise control of the power density being applied at different points around the weld junction allows the creation of welds with greatly improved weld quality. Alternatively, one could control the power density applied during a pass by altering the speed of the laser during the pass. For example, rather than having the laser output increase as the beam moves towards the junction and then decrease as it moves away from the junction to achieve, the speed of the laser could decrease as it approaches the junction and increase as it moves away from the junction. Alternatively, both the speed and the output intensity of the laser could be varied during a pass.

Furthermore, rather than applying the same pulse shape (i.e. intensity profile) during each mark move of the laser, different pulse shapes can be predefined and associated with different moves of the galvo head. In this case, the controller would be configured to send synchronized pulse initiation signals that specify which pulse shape to apply during a specified move. For example, one set of pulse shapes could be applied during the initial set of short passes across the material junction shown in FIG. 10, with another set of pulse shapes applied during the longer passes across the material junction. Similarly, rather than having the laser make a jump move so as to always apply a pulse while moving in the same direction across the junction (i.e. from the higher melting material to the lower melting material), one pulse profile could be selected during moves in one direction and another pulse profile could be selected when moving in the opposite direction.

The pulses need not be spread across the junction on each move. For instance, it some applications, it may be desirable to jump a significant distance from the junction into the high melting part, and then to jump back to spreading a series of pulses across the junction. It is also to be understood that a pulse profile need not be continuous and that there can be small gaps or periods of low or no intensity interspersed within each pulse without departing from the spirit of the present invention.

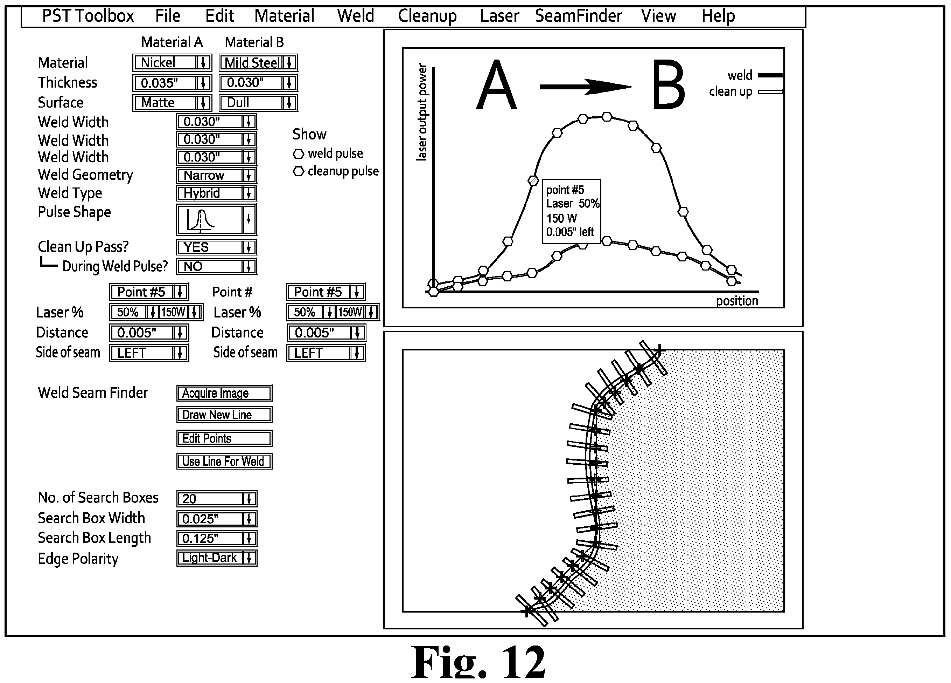

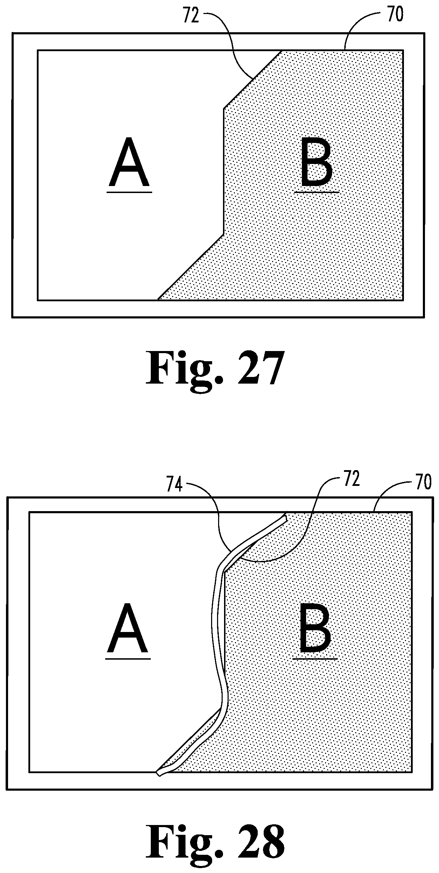

The control PC 40 described above may be programmed with software to implement the methods described herein. When applying Pulse Spread Technology (PST) to applications within a job shop or other environment where the application must be initially set up, a user interface with software tools for edge detection can make the process simpler. The combination of automatic search tools in conjunction with user input provides a user friendly mechanism for establishing the location of a laser weld seam on the junction between two potentially complex parts. The process for setting the weld location or welding line is illustrated in Figures 27-31. The process for defining the pulse shapes that will be spread across the weld line is illustrated in Figures 12-30.

Figure 27 illustrates an image of two parts, A and B, with an irregularly shaped seam 72. The parts, A and B, are mounted on the stage 38 and are viewed using an industrial monochrome camera (not shown), with the resulting image provided to the user on the display 70. The proposed weld seam 72 between the two parts may not yield a highly definitive edge due to a variety of factors, such as color irregularities in the parts, surface finish, corrosion, or the presence of the contamination. The user may be able to distinguish between surface imperfections, irregular surface finish or a weld seam that is low contrast due to his understanding of the part shape.

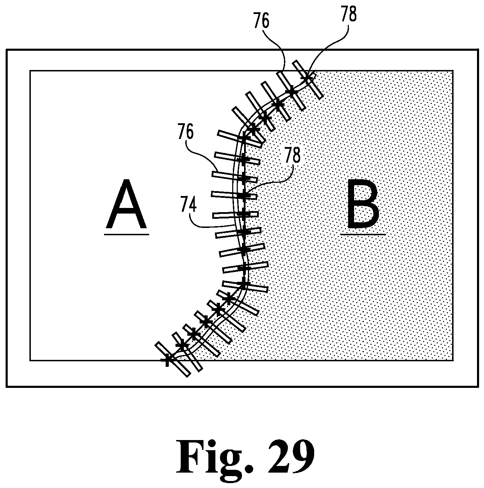

As shown in Figure 28, the user draws a line 74 on the screen representing a rough approximation of where the laser weld line should go. The software then locates a series of search boxes 76 across the user defined line 74, as shown in Figure 29, and a grey scale edge detection routine is employed to locate the points 78 within each box 76 that correspond to the actual junction between the two materials. These calculated points 78 are indicated by the plus signs in Figure 29.

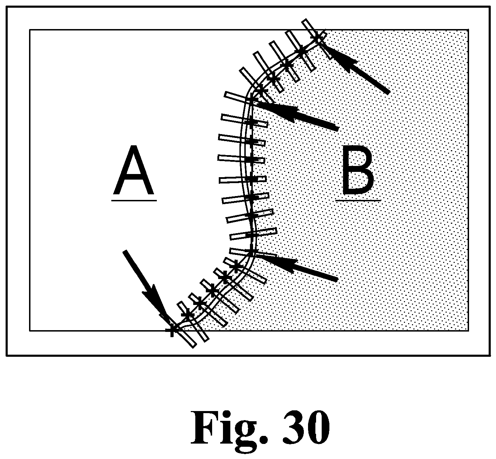

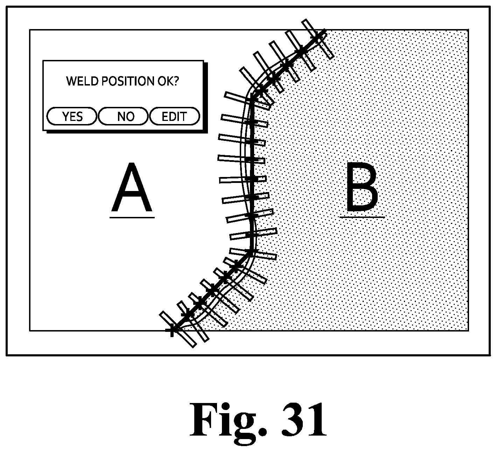

The user may then make manual adjustments to the points 78 or adds additional points to assure that the key features of the seam, such as the corners and ends of the weld line called out by the arrows of Figure 30, are adequately represented. The software then indicates the final weld line based upon the final set of points 78 within the image for final approval by the user, as shown in Figure 31.

Having established the weld line, the system determines the laser pulses that will be applied across the weld line. Additional aspects of the control software are shown in Figures 12-26. The PST system user interface allows the user to set up an application based upon pre-determined parameters. Based upon a few user inputs defining the parts that are being welded together, the system pre-loads an appropriate pulse geometry and settings consistent with the proven, empirically derived best results for the materials and thicknesses being welded. With the initial values for a new laser welding application being pre-set with values that are based upon previous experimental data, the user has an advantageous starting point for choosing settings that will produce a good quality weld.

A continually updated database offers new pre-defined and refined existing solutions for all users of Pulse Spread Technology.

Figure 12 shows the PST toolbox main screen showing a typical configuration. Input parameters appear in multiple locations within the user interface, including on the main screen and within pull down menus. Input parameters for each tested weld combination are stored within the Pulse Spread Technology database.

The input parameters can include:

- Material - pull down list of materials for side A and side B of weld
- Thickness - pull down list and input box for each side of the weld
- Surface finish - User selected values from 1= clean to 5 = maximum corrosion
- Width of weld - pull down list and input box
- Weld time - data field
- Weld overlap - data field (percentage)
- Weld geometry - pull down list: butt, lap, beveled lap
- Weld type - pull down list (keyhole, conduction, hybrid)
- Pulse shape - pull down graphic list showing basic pulse shapes

When a user inputs a few key parameters, such as material type, thickness, and geometry of the weld, the system searches for and then automatically loads an appropriate waveform. The waveform may be selected from a database of waveforms that have been determined to work with a similar material combination and input parameters. The user may then modify values of the automatically loaded waveform based upon the particular application. For example, if a user were to select mild steel and nickel for the two materials being joined, and selected a thickness of 0.020", the program would automatically pre-select values for surface finish (would assume a baseline average finish for that material), width of weld, weld time, weld overlap and pulse shape. If, for example, the mild steel had a light layer of corrosion, the user could alter the pre-selected value for surface finish, prompting the system to suggest a cleaning pass prior to welding. Or, if the user wanted a weld with a wider width than what was suggested, he may change that value.

The values for input parameters may be empirically determined for each material combination. However, a previously defined and proven welding pulse may be scaled to allow thicker or thinner versions of that material combination to be welded. Applying this derived scale factor to a missing parameter provides the user with a robust starting point for his application. A scaling example is given below.

The typical relationship between various input parameters and the values for these parameters follow an expected convention:

- Thicker materials typically require more laser energy to melt and weld than thinner materials.

- Materials with higher melting point typically require more laser energy to melt than materials with a lower melting point. For example, the melting point of iridium is 2466°C and the melting point of nickel is 1455°C. Welding these two materials together would require much more laser energy to melt the iridium than it takes to melt nickel.

- Materials with a shiny, reflective surface finish typically require more laser energy to melt than materials with dark, dull finishes due to differences in their absorptive characteristics.

- Weld times that are faster will typically require increased laser power to achieve similar melting of a given material and thickness.

The following are descriptions of the various input parameter data types:

- *Material* - Input; Selectable from continually updated PST database; user may define new materials.
- *Thickness* - Input; Numerical value selectable from PST database. Proven values for thickness are stored in the database. The user is able to enter a value for his material that may not necessarily be included in the PST database. The software will suggest a waveform with a scaled amplitude. See Scaling example given below.
- *Surface Finish* - Input; Observed surface finish of the material. Values 1 to 5 ranging from very clean to corroded. A finish pass will be recommended for materials that are not already clean.
- *Width of Weld* - Input; Numerical value selectable from PST database. Proven values for weld width are stored in the database. The user is able to enter a value for the desired weld width that has not been proven and included in the PST database. The software will suggest a waveform with a scaled range and amplitude based upon linearly extrapolated weld widths for tested materials.
- *Weld Time* - Input; Numerical time value for the duration of each pulse. This value is empirically determined for the materials and thicknesses tested. The user may override this value. Changing the value will not affect other parameters. This parameter will automatically change if the Width of Weld parameter is changed due to the increased amount of time it takes for the laser to travel a farther distance.
- *Weld Overlap* - Input; Numerical percentage of overlap between pulses. This value is selected by the user and is not related to other parameters.
- *Weld Geometry* - Input; This is a selectable value for the geometry of the weld and includes, but is not limited to, butt weld, lap weld and beveled lap weld.
- *Weld Type* - Input; Pre-selected value for the type of laser welding based upon proven methods for the two materials listed. Whereas this value may be changed for two given materials, doing so would typically necessitate changes to other parameters.
- *Pulse Shape* - Input; Pre-selected shape (icon) correlating to empirically proven pulse shapes for the two materials. Eventual pulse shape may be modified from suggested shape by user, as described more fully below.

The main input screen includes a graph that shows the waveform of the pulse to be spread across the welding junction, with the laser power shown on the vertical axis and the position of the laser beam relative to the weld junction on the horizontal axis. An example of this graph is shown in the upper right corner of Fig. 12, which shows the variation in laser intensity as the beam passes from material A to material B for both the welding pulse (top curve-higher intensity) and a clean-up pass (bottom curve-lower intensity). The weld line across which the pulses are to be applied is shown in the graph in the lower right corner of Fig. 12, which weld line is determined as described above in connection with Figs. 27-31.

Based upon the input parameters of material type, thickness, and weld geometry, the system automatically suggests an appropriate waveform to use as a starting point for the application. The user is then allowed to modify the waveform by touching and dragging it at select points, allowing him to fine tune the welding application to achieve a desirable result. Figure 12 shows a text box reflecting the selection of point #5 of the welding pass (top curve), indicating that the laser power at that point is at 50% or 100W and that the location of that point is 0.005 inches to the left of the weld line. As illustrated, each curve has 13 different drag points. The user may add drag points to the waveform to further define and edit its shape.

The user is allowed to save a custom pulse waveform and can input user defined values for material, thickness, finish and other parameters.

If one or both materials being welded have a surface finish that is corroded or is non-uniform in appearance, a lower power clean up pass that is part of the weld pulse may be used. The clean up pass uses only enough laser energy to ablate the corrosion from the surface of the material and to create a more uniform surface without melting the material. This allows the material to absorb a more uniform and predictable amount of energy from the higher power laser welding pulse since the corrosion has been removed. For example a typical value for a clean up pass would be 30 watts of laser power as compared to a welding pass, which might use 300 watts of laser power.

The clean up pass may be used on an application in three ways. First, it may be incorporated into a single weld pulse by using low power as the beam moves in one direction and then higher power as it moves across the weld junction in the other direction. Or, the clean up pulse could be used in an alternating fashion, by using a discrete low power clean up pass followed by a separate, high power weld pulse. In this case high power and low power pulses are alternated. A third scenario would allow only clean up passes following the seam of the two parts, so that the user could inspect the junction prior to welding.

The type of the weld also dictates the shape of the waveform that is used. A keyhole weld could use a larger amount of power at the beginning of the weld as the material is initially pierced, forming the keyhole and then could be reduced some to allow the material to be welded without cutting through the material as it welds. In the case of a conduction weld, a reduced slope waveform could produce a more gradual heating of the material.

Values for all parameters and functions of the program may be accessed through the pull-down menus. Key parameters that are widely used to define laser welding parameters are displayed on the main screen.

Menu Description:

The following descriptions characterize the menu structure and parameters that a user may be able to access in the main program.

PST Toolbox Menu:

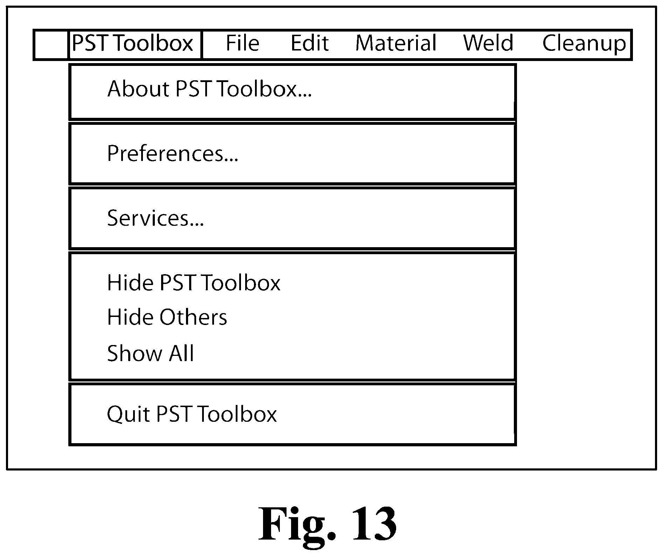

Preferences and tools for configuring PST Toolbox along with information about the application are found under this menu. (see Figure 13)

File Menu:

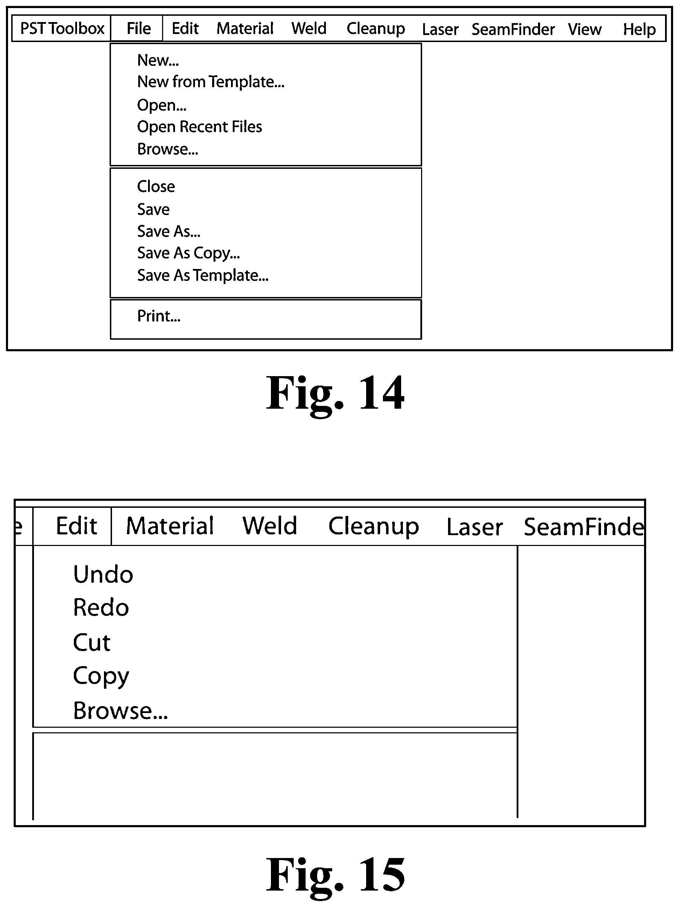

Basic file management functions are available under this menu, similar to most common software. (see Figure 14)

Edit Menu:

Basic editing functions are available under this menu, similar to most common software. (see Figure 15)

Material Menu:

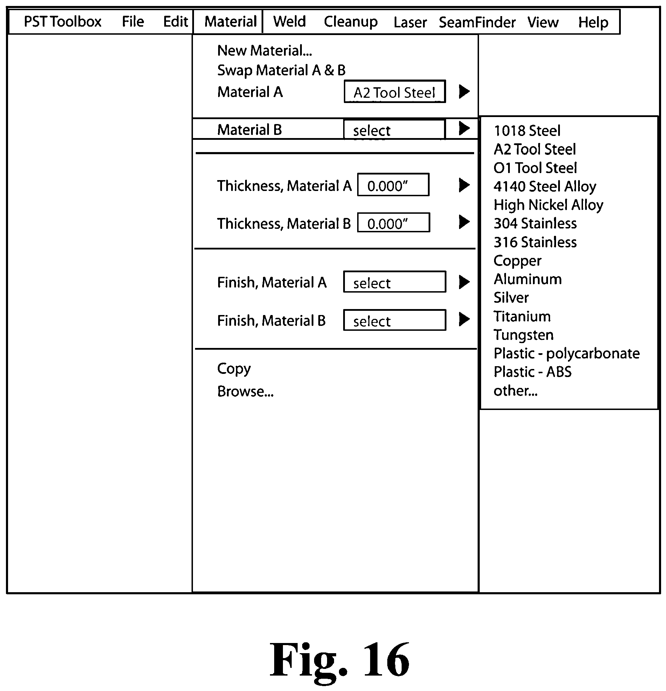

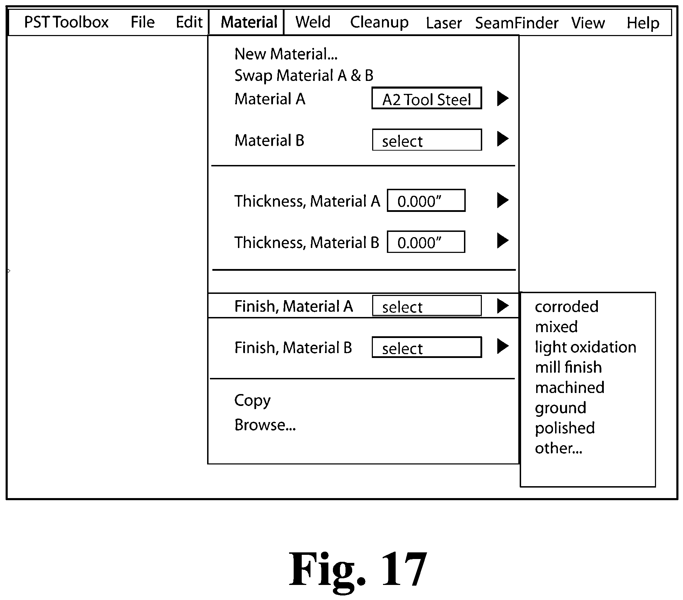

This menu includes tools for selecting and defining the properties of each material being welded together. The menu allows the user to select from a list of materials that have been previously defined or that have been configured and saved by the user. The choices include material, thickness and finish. The user may define a new material and thickness and has the opportunity to save the values for that material for future use. (see Figures 16 & 17)

Weld Menu:

The welding profile, including the physical dimensions of a weld, the laser power based upon position along the seam and the amount of overlap for each pulse may be defined within this menu.

The Weld Profile Editor is a graphic display that allows the user to manipulate points along a graph, defining the amount of laser power the pulse uses as it passes across the weld junction. The user is able to modify the points along the pulse and then save the resultant waveform for current and future applications. The interface allows the user to drag points along the waveform with the mouse, or the user can choose to input values for each point via keyboard input. Users can also add points to the waveform further defining its shape.

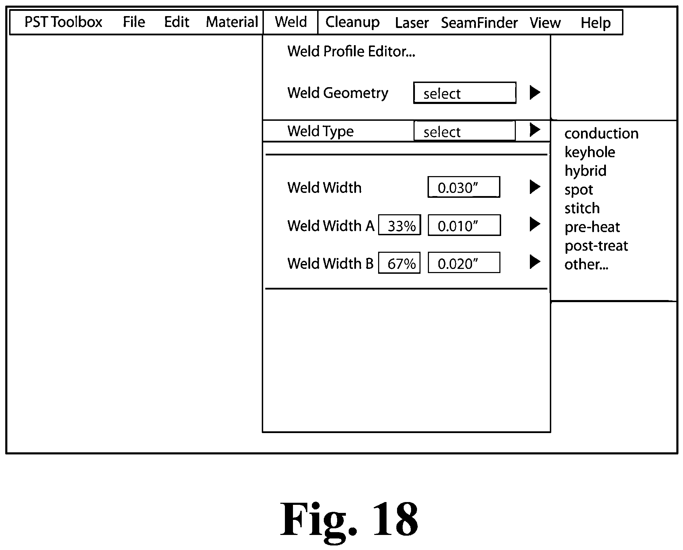

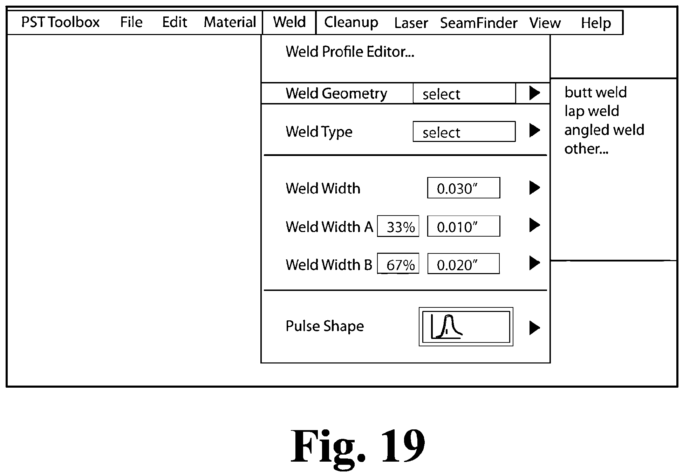

Basic weld types can also be selected, such as keyhole, conduction or hybrid combinations. By selecting a basic weld type, an appropriate weld profile is suggested by the system and can then be adjusted to fit the application at hand. (see Figures 18 & 19)

Cleanup Menu:

Similar to the graphic interface used to define the welding profile, a cleaning profile may also be viewed, edited and saved using the Cleanup Profile Editor.

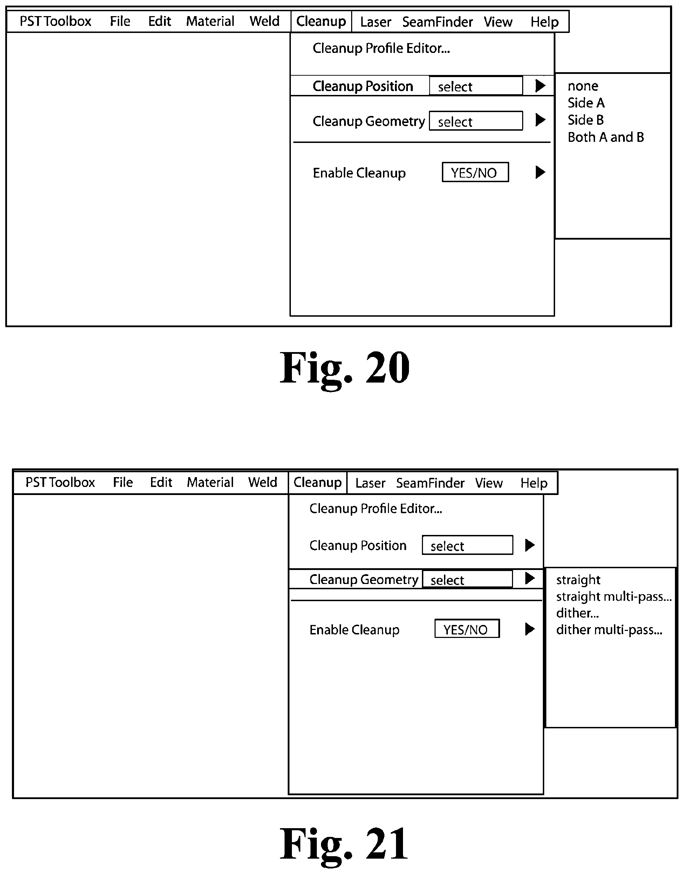

Values for a cleanup profile can also be quickly selected via menus, which result in a pre-loaded cleanup profile, which may be edited by the user. (see Figures 20 & 21)

Laser Menu:

Settings related to the particular brand of laser that is being used for the system are available in this menu. Preferences within the PST Toolbox menu allow the user to pre-select laser brands and models which may pre-load variables in this menu.

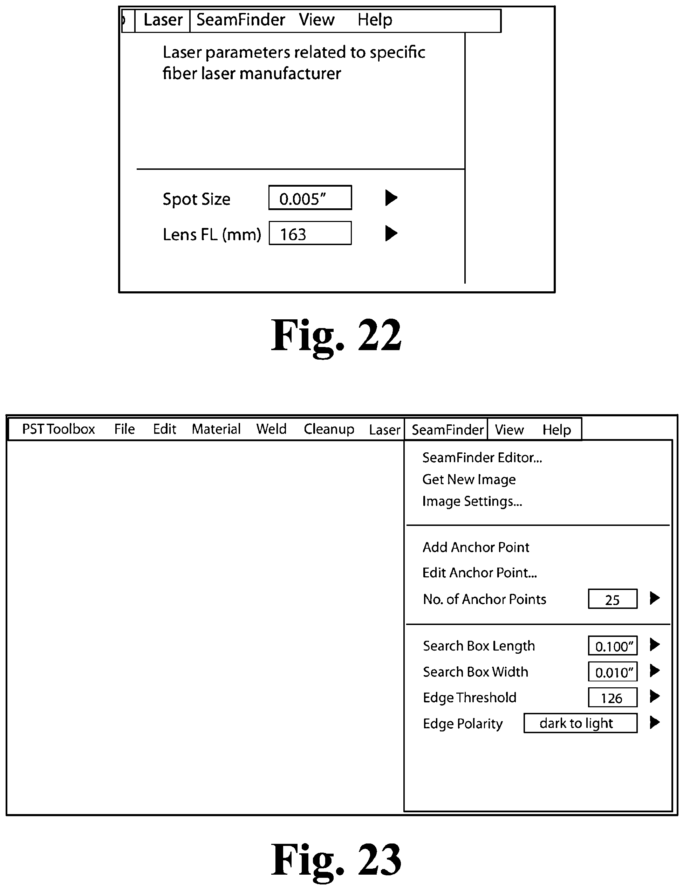

Other laser beam characteristics may be defined within this menu such as laser spot size and lens focal length, (see Figure 22)

SeamFinder Menu:

The SeamFinder feature of PST Toolbox software allows the user to define the location of a weld seam as seen through an on-axis camera. The SeamFinder is a graphical interface that superimposes the laser seam path on top of the camera image and allows the user to manipulate the position and shape of the weld path.

The user is able to change values for tools related to detecting the weld seam position and for fine tuning this path. The graphic display shows the final weld path superimposed on the camera view of the part that is to be welded. (see Figure 23) The operation of the SeamFinder has been described above in connection with Figures 27-31.

View Menu:

Options for changing the view that is seen on the main interface screen are available in this menu. (see Figure 15)

Help Menu:

Online help for any function of PST Toolbox is available within this menu.

Scaling Example

A previously defined and proven welding pulse may be scaled to allow thicker or thinner versions of that material combination to be welded. Applying this derived scale factor to a missing parameter provides the user with a robust starting point for his application.

Start with a proven laser welding pulse for a material combination of known thickness and considering the same material combination, but at an increased thickness, we desire to know the amount to scale the waveform. We define this as a laser power percentage increase,

$P_{NEW}$ = Laser Power Percentage Increase

Change in thickness, or 'thickness factor' is also expressed as a percentage increase,

F = Thickness Percentage Increase.

A constant is included in this formula to account for the thermodynamics of the materials being welded together,

$$W_C = \text{Welding Constant.}$$

$$P_{NEW} = W_C \left( F^2 + F \right)$$

By weld testing samples at two different thicknesses, we can compare the amount of laser power used at a point along the laser pulse curve for both samples and derive a value for $W_C$. This value may be used to calculate an estimated laser welding pulse for thicker materials.

Sample Calculation:

Two laser welded samples of different, known thicknesses have been tested and the laser pulse waveform has been stored in the database. For a given point along the pulse, we can see the laser power required to effectively weld for both samples. This results in a value for $P_{NEW}$ or percentage increase in power. We can also see the thickness relationship, which yields a thickness percentage increase F. We can solve the equation and determine the welding constant $W_C$ for that material combination.

Known samples:

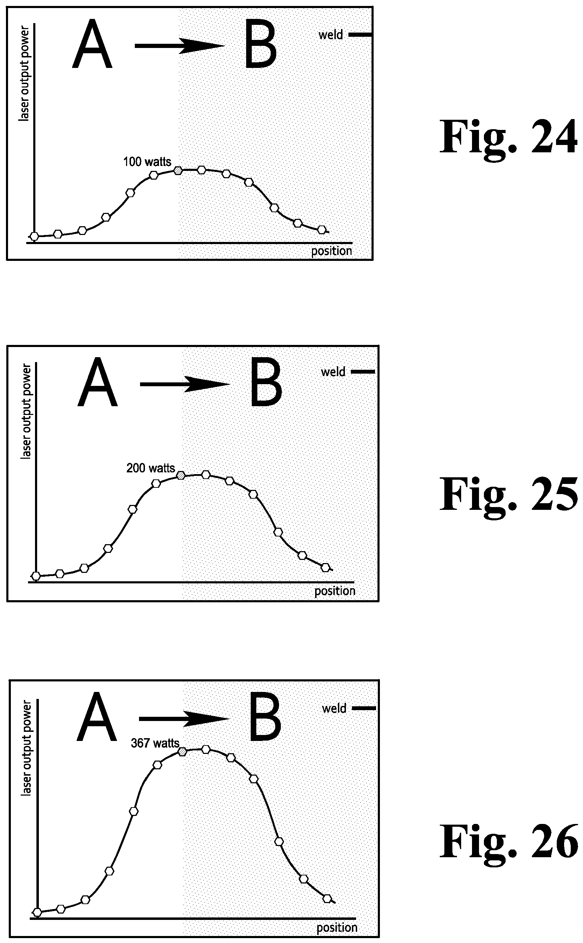

.020" thick nickel welded to .020" thick steel laser power at a given sample point = 100 watts (see Figure 24) and
.030" thick nickel welded to .030" thick steel laser power at the same sample point = 200 watts (see Figure 25)

Therefore, the thickness percentage increase F = 50% or .5 and the power increase $P_{NEW}$ = 100% or 1. Solving for the welding constant,

$$W_C = (P_{NEW})/(F^2 + F)$$

$W_C = 1/(0.5^2 + 0.5) = 1.33$

Now, we can estimate a new laser pulse waveform for welding an untested material thickness by applying the formula with the derived welding constant $W_C$ for that material combination.

Problem: 0.040" thick material not yet stored in the material database.

Using the derived welding constant $W_C$ = 1.33, we can determine $P_{NEW}$ for this new material thickness.

$$P_{NEW} = 1.33(1^2 + 1)$$

$P_{NEW}$ = 2.67, or a 267% increase in power

The new laser power required for welding at that particular point is estimated at 2.67 + 1 * (100 watts) = 367 watts

System Example

A laser welding system according to FIG. 8 was created using the following components:

System PC: Core systems USA 20132-4U006.01 rack mount PC with touchscreen display
Galvo Control: Cambridge Tech SM1000S-15-5 Galvo control with 5m cables
Galvo Head: Cambridge Tech 61725PSXY2-YP Galvo scan head; Cambridge Tech P0075-0010 (Linos 4401-288-000-20) 254mm lens; Cambridge Tech 720-80437-05-5 Scan head spacer plate
Fiber laser: IPG YLR-300-AC-Y11 300 W fiber laser; IPG P45-003757 5m armored fiber to QBH connector
Pulse Generator: National Instruments 781502-01 NI-9148 Ethernet Rio Exp Chassis; National Instruments 779351-01 #9401 8-CH TTL DIO 100nS module; National Instruments 779012-01 #9263 4Ch analog output module
Programming software: National instruments lab-VIEW 12.0; National Instruments LabVIEW FPGA module; Cambridge Tech Universal API with Lab-VIEW drivers.

The system was used to weld a metal alloy having a melting point of 2410°C to a metal alloy having a melting point of 1455°C. The pulses were spread over an area that extended 15μm into each material. Upon completion, the parts were examined and a substantially uniform weld pool was observed with similar amounts of each material having been melted.

**Claims**

1. A method of laser welding, comprising:
   steering a laser beam (56) in a series of passes across the junction (54) between first and second materials (12, 14), wherein during each of the passes the laser power is applied across a continuous high aspect ratio area (55) that traverses the junction (54), wherein the high aspect ratio area (55) for each pass comprises a first elongated area (58) on the first material (12) and a second elongated area (60) on the second material (14); and **characterized by**:
   varying the power density that is applied during each pass in a predetermined manner such that the average power density that is applied to each of the first elongated areas (58) is different from the average power density that is applied to each of the second elongated areas (60) so as to compensate for different thermal characteristics of the materials (12, 14).

2. The method of claim 1 wherein during each pass the average power density applied to the first elongated areas (58) is at least 25% greater than the average power density applied to the second elongated area (60).

3. The method of claim 1 wherein varying the power density comprises varying the speed at which the beam (56) moves across the high aspect ratio area (55); or
   wherein varying the power density comprises varying the intensity of the laser beam (56) as the beam (56) moves across the high aspect ratio area (55).

4. The method of claim 1 wherein the first elongated area (58) has an elongated length that is within about 25% of the corresponding elongated length of the second elongated area (60);
   wherein optionally the first elongated area (58) has an elongated length that is within about 10% of the corresponding elongated length defined by the second elongated area (60); or
   wherein the size of the first elongated area (58) is within about 25% of the size of the second elongated area (60).

5. The method of claim 1 wherein the average power density applied to the half of the first elongated area (58) that is furthest from the junction (54) is less than 70% of the average energy density applied to the other half of the first elongated area (58) that is nearest the junction (54);
   wherein optionally the average power density applied to the half of the second elongated area (60) that is furthest from the junction (54) is less than 50% of the average energy density applied to the half of the second elongated area (60) that is nearest the junction (54).

6. The method of any preceding claim, the method further comprising:

   identifying the junction (54) between first and second materials (12, 14) having different thermal characteristics;
   determining a path for a laser beam (55), the path comprising the series of passes across the junction (54); and
   determining a laser power density profile to be applied during the series of passes across the junction (54), wherein the power density that is applied during each pass is varied according to the determined laser power density profile.

7. The method of claim 6 wherein determining the laser power density profile to be applied during each of the series of passes across the junction (54) includes presenting an initial profile to a user and allowing the user to modify the initially presented profile; and
   wherein optionally presenting the initial profile to the user includes receiving user inputs corresponding to the first and second materials (12, 14) being welded and selecting a profile from a profile database based on the user inputs.

8. The method of any preceding claim wherein the laser beam (55) is a fiber laser beam.

9. A laser welding system (41) for dynamically varying the laser power density applied to different sides of a material junction (54), comprising:

   an input device (40) for receiving a user specified series of moves for a fiber laser beam (55) across a material junction (54) and one or more varying intensity profiles for the laser beam (55) to be applied during specified moves in the series of moves;

a fiber laser (44) configured to generate a laser beam (55) according to the one or more varying intensity profiles upon receipt of a corresponding laser initiation signal; beam steering optics (46) for moving the generated laser beam (55); and

a controller (42) configured to send the laser initiation signals to the fiber laser (44) and to operate the beam steering optics (46) so as to move the laser beam (55) across the junction according to the specified series of moves, wherein the laser initiation signals are synchronized with the operation of the beam steering optics (46) such that the laser power density applied on one side of the material junction (54) is greater than the laser power density applied on the other side of the material junction (54).

10. The laser welding system (41) of claim 9 wherein the controller (42) is configured such that while the laser is being applied the speed of the laser changes and, optionally, the controller (42) is configured such that while the laser is being applied the speed of the laser decreases as it moves towards the junction (54) and increases as it moves away from the junction (54); or wherein the controller (42) is configured such that while the laser is being applied the intensity of the laser changes and, optionally, the controller (42) is configured such that while the laser is being applied the intensity of the laser increases as the beam approaches the junction (54) and decreases as it moves away from the junction (54).

11. The laser welding system (41) of claims 9 or claim 10, wherein the input device (40) has a user interface that is operable to provide a representative display of a varying intensity profile for the laser beam and allows the user to make modifications to the varying intensity profile.

12. The laser welding system (41) of claim 11 wherein the input device (40) is coupled to a database of different intensity profiles, wherein a user may select an intensity profile from the database to be the varying intensity profile.

13. The laser welding system (41) of any one of claims 9 to 12 wherein the input device (40) comprises a user interface that provides a representative display of the material junction (54); and wherein the user interface (41) allows the user to specify a weld line on the representative display of the material junction.

14. The laser welding system (41) of claim 9, further comprising a pulse generator (48) coupled to the fiber laser (44) and operative to generate pulses according to a user specified intensity profile upon receipt of the laser initiation signal; and wherein the beam steering optics (46) are operative to spread the laser pulses across high aspect ratio areas (55) of a workpiece including the junction (54); and

wherein the controller is operative to cause the laser pulses to be spread along a series of predetermined high aspect ratio areas (55) of the workpiece; wherein the pulse generator (48) is operative to generate different pulses according to different user specified intensity profiles upon receipt of different laser initiation signals; wherein the input device (40) is capable of receiving the user specified intensity profile to be applied during specified moves in the series of moves; wherein the pulse generator (48) comprises a field programmable gate array in analog communication with a fiber laser (44); wherein the input device (40) comprises a control computer that is in digital communication with the field programmable gate array and the controller.

**Patentansprüche**

1. Verfahren zum Laserschweißen, umfassend:
Lenken eines Laserstrahls (56) in einer Folge von Durchläufen über die Verbindungsstelle (54) zwischen einem ersten und einem zweiten Material (12, 14) hinweg, worin die Laserleistung während jedes der Durchläufe über einen kontinuierlichen Bereich (55) mit hohem Seitenverhältnis hinweg, der die Verbindungsstelle (54) überquert, zugeführt wird, worin der Bereich (55) mit hohem Seitenverhältnis für jeden Durchgang einen ersten länglichen Bereich (58) auf dem ersten Material (12) und einen zweiten länglichen Bereich (60) auf dem zweiten Material (14) umfasst, und **gekennzeichnet durch**:
Variieren der Leistungsdichte, die während jedes Durchgangs zugeführt wird, auf vorbestimmte Weise, sodass die durchschnittliche Leistungsdichte, die jedem der ersten länglichen Bereiche (58) zugeführt wird, sich von der durchschnittlichen Leistungsdichte unterscheidet, die jedem der zweiten länglichen Bereiche (60) zugeführt wird, um unterschiedliche thermische Eigenschaften der Materialien (12, 14) dadurch zu kompensieren.

2. Verfahren nach Anspruch 1, worin während jedes Durchgangs die durchschnittliche Leistungsdichte, die den ersten länglichen Bereichen (58) zugeführt wird, mindestens 25% größer ist als die durchschnittliche Leistungsdichte, die den zweiten länglichen Bereichen (60) zugeführt wird.

**3.** Verfahren nach Anspruch 1, worin das Variieren der Leistungsdichte umfasst: Variieren der Geschwindigkeit, mit der sich der Strahl (56) über den Bereich (55) mit hohem Seitenverhältnis hinwegbewegt; oder worin das Variieren der Leistungsdichte umfasst: Variieren der Intensität des Laserstrahls (56), wenn der Strahl (56) sich über den Bereich (55) mit hohem Seitenverhältnis hinwegbewegt.

**4.** Verfahren nach Anspruch 1, worin der erste längliche Bereich (58) eine Längenausdehnung aufweist, die innerhalb von etwa 25% der entsprechenden Längenausdehnung des zweiten länglichen Bereichs (60) liegt; worin der erste längliche Bereich (58) optional eine Längenausdehnung aufweist, die innerhalb von etwa 10% der entsprechenden Längenausdehnung liegt, die durch den zweiten länglichen Bereich (60) definiert ist; oder worin die Größe des ersten länglichen Bereichs (58) innerhalb von etwa 25% der Größe des zweiten länglichen Bereichs (60) liegt.

**5.** Verfahren nach Anspruch 1, worin die durchschnittliche Leistungsdichte, die derjenigen Hälfte des ersten länglichen Bereichs (58), die am weitesten von der Verbindungsstelle (54) entfernt ist, zugeführt wird, weniger als 70% der durchschnittlichen Energiedichte beträgt, die der anderen Hälfte des ersten länglichen Bereichs (58), die der Verbindungsstelle (54) am nächsten liegt, zugeführt wird; worin optional die durchschnittliche Leistungsdichte, die derjenigen Hälfte des zweiten länglichen Bereichs (60), die am weitesten von der Verbindungsstelle (54) entfernt ist, zugeführt wird, weniger als 50% der durchschnittlichen Energiedichte beträgt, die derjenigen Hälfte des zweiten länglichen Bereichs (60), die der Verbindungsstelle (54) am nächsten liegt, zugeführt wird.

**6.** Verfahren nach einem der vorhergehenden Ansprüche, wobei das Verfahren ferner umfasst:

Identifizieren der Verbindungsstelle (54) zwischen einem ersten und einem zweiten Material (12, 14) mit unterschiedlichen thermischen Eigenschaften; Bestimmen eines Weges für einen Laserstrahl (55), wobei der Weg die Folge von Durchläufen über die Verbindungsstelle (54) hinweg umfasst; und Bestimmen eines Laserleistungsdichteprofils, das während der Folge von Durchläufen über die Verbindungsstelle (54) hinweg anzuwenden ist, worin die Leistungsdichte, die während jedes Durchgangs zugeführt wird, gemäß dem bestimmten Laserleistungsdichteprofil variiert wird.

**7.** Verfahren nach Anspruch 6, worin das Bestimmen des Laserleistungsdichteprofils, das während jedes der Folge von Durchläufen über die Verbindungsstelle (54) hinweg anzuwenden ist, Präsentieren eines Anfangsprofils dem Benutzer und Ermöglichen, dass der Benutzer das anfangs präsentierte Profil modifiziert, einschließt; und worin optional das Präsentieren eines Anfangsprofils dem Benutzer einschließt: das Empfangen von Benutzereingaben, die dem ersten und dem zweiten zu schweißenden Material (12, 14) entsprechen, und auf den Benutzereingaben beruhendes Auswählen eines Profils aus einer Profildatenbank.

**8.** Verfahren nach einem der vorhergehenden Ansprüche, worin der Laserstrahl (55) ein Faserlaserstrahl ist.

**9.** Laserschweißsystem (41) zum dynamischen Variieren der Laserleistungsdichte, die unterschiedlichen Seiten einer Materialverbindungsstelle (54) zugeführt wird, umfassend:

eine Eingabevorrichtung (40) zum Empfangen einer vom Benutzer festgelegten Folge von Bewegungen für einen Faserlaserstrahl (55) über eine Materialverbindungsstelle (54) hinweg und eines oder mehrerer variierender Intensitätsprofile für den Laserstrahl (55), die während festgelegter Bewegungen in der Folge von Bewegungen anzuwenden sind; einen Faserlaser (44), der dafür konfiguriert ist, bei Empfang eines entsprechenden Laser-Inbetriebnahmesignals einen Laserstrahl (55) gemäß dem einen oder den mehreren variierenden Intensitätsprofilen zu erzeugen; eine Strahllenkungsoptik (46) zum Bewegen des erzeugten Laserstrahls (55); und eine Steuerungseinrichtung (42), die dafür konfiguriert ist, die Laser-Inbetriebnahmesignale an den Faserlaser (44) zu senden und die Strahllenkungsoptik (46) so zu betreiben, dass der Laserstrahl (55) gemäß der festgelegten Folge von Bewegungen über die Verbindungsstelle bewegt wird, worin die Laser-Inbetriebnahmesignale so mit dem Betrieb der Strahllenkungsoptik (46) synchronisiert werden, dass die auf einer Seite der Materialverbindungsstelle (54) zugeführte Laserleistungsdichte größer ist als die auf der anderen Seite der Materialverbindungsstelle (54) zugeführte Laserleistungsdichte.

**10.** Laserschweißsystem (41) nach Anspruch 9, worin die Steuerungseinrichtung (42) so konfiguriert wird, dass, während der Laser angewendet wird, die Geschwindigkeit des Lasers sich ändert, und optional die Steuerungseinrichtung (42) so konfiguriert wird, dass, während der Laser angewendet wird, die Geschwindigkeit des Lasers abnimmt, wenn er sich auf die Verbindungsstelle (54) zubewegt, und zunimmt, wenn er sich von der Verbindungsstelle (54) wegbewegt; oder

worin die Steuerungseinrichtung (42) so konfiguriert wird, dass, während der Laser angewendet wird, die Intensität des Lasers sich ändert, und optional die Steuerungseinrichtung (42) so konfiguriert wird, dass, während der Laser angewendet wird, die Intensität des Lasers zunimmt, wenn der Strahl sich der Verbindungsstelle (54) nähert, und abnimmt, wenn er sich von der Verbindungsstelle (54) wegbewegt.

**11.** Laserschweißsystem (41) nach Anspruch 9 oder Anspruch 10, worin die Eingabevorrichtung (40) eine Benutzerschnittstelle aufweist, die dafür betreibbar ist, eine repräsentative Anzeige eines variierenden Intensitätsprofils für den Laserstrahl bereitzustellen und dem Benutzer zu ermöglichen, Modifikationen an dem variierenden Intensitätsprofil vorzunehmen.

**12.** Laserschweißsystem (41) nach Anspruch 11, worin die Eingabevorrichtung (40) mit einer Datenbank unterschiedlicher Intensitätsprofile gekoppelt ist, worin ein Benutzer ein Intensitätsprofil aus der Datenbank als das variierende Intensitätsprofil auswählen kann.

**13.** Laserschweißsystem (41) nach einem der Ansprüche 9 bis 12, worin die Eingabevorrichtung (40) eine Benutzerschnittstelle umfasst, die eine repräsentative Darstellung der Materialverbindungsstelle (54) bereitstellt; und

worin die Benutzerschnittstelle (41) dem Benutzer ermöglicht, eine Schweißlinie auf der repräsentativen Darstellung der Materialverbindungsstelle festzulegen.

**14.** Laserschweißsystem (41) nach Anspruch 9, ferner einen Impulsgenerator (48) umfassend, der mit dem Faserlaser (44) gekoppelt und betriebsfähig ist, bei Empfang des Laser-Inbetriebnahmesignals Impulse gemäß einem vom Benutzer festgelegten Intensitätsprofil zu erzeugen; und

worin die Strahllenkungsoptik (46) betriebsfähig ist, die Laserimpulse über Bereiche (55) mit hohem Seitenverhältnis eines Werkstücks, das die Verbindungsstelle (54) einschließt, zu spreizen; und

worin die Steuerungseinrichtung betriebsfähig ist, zu bewirken, dass die Laserimpulse entlang einer Folge von vorbestimmten Bereichen (55) mit hohem Seitenverhältnis des Werkstücks gespreizt werden; worin der Impulsgenerator (48) betriebsfähig ist, bei Empfang unterschiedlicher Laser-Inbetriebnahmesignale unterschiedliche Impulse gemäß unterschiedlichen vom Benutzer festgelegten Intensitätsprofilen zu erzeugen;

worin die Eingabevorrichtung (40) zum Empfangen des vom Benutzer festgelegten Intensitätsprofils, das während festgelegter Bewegungen in der Folge von Bewegungen anzuwenden ist, imstande ist;

worin der Impulsgenerator (48) ein feldprogrammierbares Gate-Array in analoger Kommunikation mit einem Faserlaser (44) umfasst;

worin die Eingabevorrichtung (40) einen Steuerungscomputer umfasst, der in digitaler Kommunikation mit dem feldprogrammierbaren Gate-Array und der Steuerungseinrichtung steht.

## Revendications

**1.** Procédé de soudage au laser, comprenant l'étape consistant à :

diriger un faisceau laser (56) dans une série de passes à travers la jonction (54) entre un premier et un second matériau (12, 14), dans lequel pendant chacune des passes, la puissance laser est appliquée à travers une zone à rapport d'aspect élevé continue (55) qui traverse la jonction (54), dans lequel la zone à rapport d'aspect élevé (55), pour chaque passe, comprend une première zone allongée (58) sur le premier matériau (12) et une seconde zone allongée (60) sur le second matériau (14); et **caractérisé par** l'étape consistant à :

faire varier la densité de puissance qui est appliquée pendant chaque passe d'une manière prédéterminée de sorte que la densité de puissance moyenne qui est appliquée à chacune des premières zones allongées (58) est différente de la densité de puissance moyenne qui est appliquée à chacune des secondes zones allongées (60) de manière à compenser des caractéristiques thermiques différentes des matériaux (12, 14).

**2.** Procédé selon la revendication 1, dans lequel, à chaque passe, la densité de puissance moyenne appliquée aux premières zones allongées (58) est au moins supérieure de 25 % à la densité de puissance moyenne appliquée à la seconde zone allongée (60).

**3.** Procédé selon la revendication 1, dans lequel la variation de la densité de puissance comprend une variation de la vitesse à laquelle le faisceau (56) se déplace à travers la zone à rapport d'aspect élevé (55) ; ou

dans lequel la variation de la densité de puissance comprend une variation de l'intensité du faisceau laser (56) lorsque le faisceau (56) se déplace à travers la zone à rapport d'aspect élevé (55).

**4.** Procédé selon la revendication 1, dans lequel la première zone allongée (58) présente une longueur allongée qui se situe dans environ 25 % de la longueur allongée correspondante de la seconde zone allongée (60) ;

dans lequel facultativement la première zone allongée (58) présente une longueur allongée qui se situe dans environ 10 % de la longueur allongée correspondante définie par la seconde zone allongée (60) ; ou

dans lequel la taille de la première zone allongée (58) se situe dans environ 25 % de la taille de la seconde zone allongée (60).

5. Procédé selon la revendication 1, dans lequel la densité de puissance moyenne appliquée à la moitié de la première zone allongée (58) qui est la plus éloignée de la jonction (54) est inférieure à 70 % de la densité d'énergie moyenne appliquée à l'autre moitié de la première zone allongée (58) qui est la plus proche de la jonction (54) ;

dans lequel facultativement la densité de puissance moyenne appliquée à la moitié de la seconde zone allongée (60) qui est la plus éloignée de la jonction (54) est inférieure à 50 % de la densité d'énergie moyenne appliquée à la moitié de la seconde zone allongée (60) qui est la plus proche de la jonction (54).

6. Procédé selon l'une quelconque des revendications précédentes, le procédé comprenant en outre les étapes consistant à :

identifier la jonction (54) entre un premier et un second matériau (12, 14) présentant des caractéristiques thermiques différentes ;

déterminer un trajet pour un faisceau laser (55), le trajet comprenant la série de passes à travers la jonction (54) ; et

déterminer un profil de densité de puissance laser à appliquer pendant la série de passes à travers la jonction (54), dans lequel la densité de puissance qui est appliquée pendant chaque passe varie en fonction du profil de densité de puissance laser déterminé.

7. Procédé selon la revendication 6, dans lequel la détermination du profil de densité de puissance laser à appliquer pendant chacune de la série de passes à travers la jonction (54) comprend une présentation d'un profil initial à un utilisateur et une autorisation à l'utilisateur de modifier le profil présenté initialement ; et

dans lequel la présentation facultative du profil initial à l'utilisateur comprend une réception d'entrées d'utilisateur correspondant aux premier et second matériaux (12, 14) soudés et une sélection d'un profil dans une base de données de profils sur la base des entrées d'utilisateur.

8. Procédé selon l'une quelconque des revendications précédentes, dans lequel le faisceau laser (55) est un faisceau laser à fibre.

9. Système de soudage au laser (41) permettant de faire varier de manière dynamique la densité de puissance laser appliquée à différents côtés d'une jonction de matériaux (54), comprenant :

un dispositif d'entrée (40) permettant de recevoir une série de déplacements spécifiée par un utilisateur pour un faisceau laser à fibre (55) à travers une jonction de matériaux (54) et un ou plusieurs profil(s) d'intensité variable(s) pour le faisceau laser (55) à appliquer pendant des déplacements spécifiés dans la série de déplacements ;

un laser à fibre (44) configuré afin de générer un faisceau laser (55) selon les un ou plusieurs profil(s) d'intensité variable(s) lors de la réception d'un signal d'allumage laser correspondant ;

une optique de direction de faisceau (46) permettant de déplacer le faisceau laser généré (55) ; et

un dispositif de commande (42) configuré afin d'envoyer les signaux d'allumage laser au laser à fibre (44) et afin de faire fonctionner l'optique de direction du faisceau (46) de manière à déplacer le faisceau laser (55) à travers la jonction selon la série de déplacements spécifiée, dans lequel les signaux d'allumage laser sont synchronisés avec le fonctionnement de l'optique de direction du faisceau (46) de telle sorte que la densité de puissance laser appliquée sur un côté de la jonction de matériaux (54) est supérieure à la densité de puissance laser appliquée sur l'autre côté de la jonction de matériaux (54).

10. Système de soudage au laser (41) selon la revendication 9, dans lequel le dispositif de commande (42) est configuré de telle sorte que pendant l'application du laser, la vitesse du laser change et, facultativement, le dispositif de commande (42) est configuré de telle sorte que tandis que le laser est appliqué, la vitesse du laser diminue à mesure qu'il se déplace vers la jonction (54) et augmente à mesure qu'il s'éloigne de la jonction (54) ; ou

dans lequel le dispositif de commande (42) est configuré de telle sorte que pendant que le laser est appliqué, l'intensité du laser change et, facultativement, le dispositif de commande (42) est configuré de telle sorte que pendant que le laser est appliqué, l'intensité du laser augmente à mesure que le faisceau s'approche de la jonction (54) et diminue à mesure qu'il s'éloigne de la jonction (54).

11. Système de soudage au laser (41) selon la revendication 9 ou la revendication 10, dans lequel le dispositif d'entrée (40) présente une interface utilisateur qui est utilisable afin de fournir un affichage représentatif d'un profil d'intensité variable pour le faisceau laser et autoriser à l'utilisateur d'apporter des modifications au profil d'intensité variable.

12. Système de soudage au laser (41) selon la revendication 11, dans lequel le dispositif d'entrée (40) est couplé à une base de données de différents profils d'intensité, dans lequel un utilisateur peut sélectionner un profil d'intensité dans la base de données pour qu'il soit le profil d'intensité variable.

13. Système de soudage au laser (41) selon l'une quelconque des revendications 9 à 12, dans lequel le dispositif d'entrée (40) comprend une interface utilisateur qui fournit un affichage représentatif de la jonction de matériaux (54) ; et
dans lequel l'interface utilisateur (41) permet à l'utilisateur de spécifier une ligne de soudure sur l'affichage représentatif de la jonction de matériaux.

14. Système de soudage au laser (41) selon la revendication 9,
comprenant en outre un générateur d'impulsions (48) couplé au laser à fibre (44) et opérationnel afin de générer des impulsions selon un profil d'intensité spécifié par l'utilisateur lors de la réception du signal d'allumage laser ; et
dans lequel l'optique de direction de faisceau (46) est opérationnelle afin de propager les impulsions laser à travers des zones à rapport d'aspect élevé (55) d'une pièce à usiner comprenant la jonction (54) ; et
dans lequel le dispositif de commande est opérationnel afin de provoquer la propagation des impulsions laser le long d'une série de zones à rapport d'aspect élevé (55) prédéterminées de la pièce à usiner ;
dans lequel le générateur d'impulsions (48) est opérationnel afin de générer différentes impulsions selon différents profils d'intensité spécifiés par l'utilisateur lors de la réception de différents signaux d'allumage laser ;
dans lequel le dispositif d'entrée (40) est capable de recevoir le profil d'intensité spécifié par l'utilisateur à appliquer pendant des déplacements spécifiés de la série de déplacements ;
dans lequel le générateur d'impulsions (48) comprend un réseau prédiffusé programmable par l'utilisateur en communication analogique avec un laser à fibre (44) ;
dans lequel le dispositif d'entrée (40) comprend un ordinateur de commande qui est en communication numérique avec le réseau prédiffusé programmable par l'utilisateur et le dispositif de commande.

**Fig. 1**
*(Prior Art)*

**Fig. 2**
*(Prior Art)*

**Fig. 3**
*(Prior Art)*

**Fig. 4**

*(Prior Art)*

**Fig. 5**

**Fig. 6**

Fig. 7

**Fig. 8**

**Fig. 9**

EP 2 978 559 B1

**Weld Path Movement Setup (Galvo)**

# Fig. 10

EP 2 978 559 B1

| Tack Weld Laser | Seam Weld Galvo | Seam Weld Laser | Misc Settings | | |

**Tack Weld Pulse Settings**

Sector Width (uS): 100

Dwell (uS): 0

Ramp Up (Sec): 0

Ramp Down (Sec): 0

Single Pulse

Sector Power: 0

| 50 |
| 100 |
| 100 |
| 175 |
| 275 |
| 275 |
| 175 |
| 175 |
| 100 |

Tack Freq.: NaN Hz

Tack Duty Cycle: NaN %

Limit Number of Sectors to 20 or less.

Single Pulse does NOT have dwell

**Pulse Setup**

# Fig. 11

EP 2 978 559 B1

PST Toolbox   File   Edit   Material   Weld   Cleanup   Laser   SeamFinder   View   Help

| | Material A | Material B |
|---|---|---|
| Material | Nickel | Mild Steel |
| Thickness | 0.035" | 0.030" |
| Surface | Matte | Dull |

Weld Width   0.030"
Weld Width   0.030"
Weld Width   0.030"
Weld Geometry   Narrow
Weld Type   Hybrid
Pulse Shape

Show
○ weld pulse
○ cleanup pulse

Clean Up Pass?   YES
└ During Weld Pulse?   NO

| Point #5 | Point # | Point #5 |
|---|---|---|
| Laser % | 50% 150W | Laser % | 50% 150W |
| Distance | 0.005" | Distance | 0.005" |
| Side of seam | LEFT | Side of seam | LEFT |

Weld Seam Finder   Acquire Image
Draw New Line
Edit Points
Use Line For Weld

No. of Search Boxes   20
Search Box Width   0.025"
Search Box Length   0.125"
Edge Polarity   Light-Dark

laser output power

A → B          weld ▬
               clean up ▭

point #5
Laser 50%
150 W
0.005" left

position

**Fig. 12**

| PST Toolbox | File | Edit | Material | Weld | Cleanup |

About PST Toolbox...

Preferences...

Services...

Hide PST Toolbox
Hide Others
Show All

Quit PST Toolbox

# Fig. 13

| PST Toolbox | File | Edit | Material | Weld | Cleanup | Laser | SeamFinder | View | Help |

New...
New from Template...
Open...
Open Recent Files
Browse...

Close
Save
Save As...
Save As Copy...
Save As Template...

Print...

# Fig. 14

| | Edit | Material | Weld | Cleanup | Laser | SeamFinde |

Undo
Redo
Cut
Copy
Browse...

# Fig. 15

| PST Toolbox | File | Edit | Material | Weld | Cleanup | Laser | SeamFinder | View | Help |

New Material...
Swap Material A & B
Material A        | A2 Tool Steel |  ▶

Material B        | select |  ▶        1018 Steel
                                       A2 Tool Steel
                                       O1 Tool Steel
Thickness, Material A  | 0.000″ |  ▶   4140 Steel Alloy
                                       High Nickel Alloy
Thickness, Material B  | 0.000″ |  ▶   304 Stainless
                                       316 Stainless
                                       Copper
Finish, Material A  | select |  ▶      Aluminum
                                       Silver
Finish, Material B  | select |  ▶      Titanium
                                       Tungsten
                                       Plastic - polycarbonate
Copy                                   Plastic - ABS
Browse...                              other...

# Fig. 16

| PST Toolbox | File | Edit | **Material** | Weld | Cleanup | Laser | SeamFinder | View | Help |

New Material...
Swap Material A & B
Material A          [ A2 Tool Steel ]   ▶

Material B          [ select ]   ▶

Thickness, Material A [ 0.000″ ]   ▶

Thickness, Material B [ 0.000″ ]   ▶

Finish, Material A  [ select ]   ▶       corroded
                                         mixed
Finish, Material B  [ select ]   ▶       light oxidation
                                         mill finish
Copy                                     machined
Browse...                                ground
                                         polished
                                         other...

# Fig. 17

| PST Toolbox | File | Edit | Material | Weld | Cleanup | Laser | SeamFinder | View | Help |

Weld Profile Editor...

Weld Geometry | select | ▶

Weld Type | select | ▶

conduction
keyhole
hybrid
spot
stitch
pre-heat
post-treat
other...

Weld Width | 0.030" | ▶

Weld Width A | 33% | 0.010" | ▶

Weld Width B | 67% | 0.020" | ▶

# Fig. 18

| PST Toolbox | File | Edit | Material | Weld | Cleanup | Laser | SeamFinder | View | Help |

Weld Profile Editor...

| Weld Geometry | select | ▶ | butt weld |
| Weld Type | select | ▶ | lap weld |
| | | | angled weld |
| | | | other... |

Weld Width — 0.030″ ▶

Weld Width A 33% 0.010″ ▶

Weld Width B 67% 0.020″ ▶

Pulse Shape ▶

# Fig. 19

| PST Toolbox | File | Edit | Material | Weld | Cleanup | Laser | SeamFinder | View | Help | |
|---|---|---|---|---|---|---|---|---|---|---|

Cleanup Profile Editor...

Cleanup Position    select    ▶    none
Side A
Side B
Both A and B

Cleanup Geometry    select    ▶

Enable Cleanup    YES/NO    ▶

## Fig. 20

| PST Toolbox | File | Edit | Material | Weld | Cleanup | Laser | SeamFinder | View | Help | |
|---|---|---|---|---|---|---|---|---|---|---|

Cleanup Profile Editor...

Cleanup Position    select    ▶

Cleanup Geometry    select    ▶    straight
straight multi-pass...
dither...
dither multi-pass...

Enable Cleanup    YES/NO    ▶

## Fig. 21

| Laser | SeamFinder View Help |

Laser parameters related to specific
fiber laser manufacturer

Spot Size    0.005"    ▶

Lens FL (mm)   163    ▶

# Fig. 22

PST Toolbox   File   Edit   Material   Weld   Cleanup   Laser | SeamFinder | View   Help

SeamFinder Editor...
Get New Image
Image Settings...

Add Anchor Point
Edit Anchor Point...
No. of Anchor Points    25   ▶

Search Box Length    0.100"   ▶
Search Box Width    0.010"   ▶
Edge Threshold    126   ▶
Edge Polarity    dark to light   ▶

# Fig. 23

Fig. 24

Fig. 25

Fig. 26

**Fig. 27**

**Fig. 28**

**Fig. 29**

**Fig. 30**

**Fig. 31**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0531139 A